# FASCICULE DE BREVET EUROPEEN

(11) **EP 3 981 937 B1**
(45) Date de publication et mention de la délivrance du brevet: **29.11.2023**
(21) Numéro de dépôt: 21201442.7
(22) Date de dépôt: 07.10.2021
(51) Int. Cl.: E05B 53/00, E05B 59/00, E05B 63/14, E05B 79/20, E05B 83/36, E05C 1/12, E05C 9/00, E05B 85/06, B60J 1/14, B61D 25/00, E05B 85/04

(54) **SYSTÈME DE VERROUILLAGE D'UNE TRAPPE, NOTAMMENT D'UNE TRAPPE DE VÉHICULE, ET TRAPPE DE VÉHICULE ASSOCIÉE**
VERRIEGELUNGSSYSTEM FÜR EINE KLAPPE, INSBESONDERE EINE FAHRZEUGKLAPPE, UND ENTSPRECHENDE FAHRZEUGKLAPPE
SYSTEM FOR LOCKING A HATCH, IN PARTICULAR A HATCH OF A VEHICLE, AND ASSOCIATED VEHICLE HATCH

(30) Priorité: 07.10.2020 FR 2010247
(43) Date de publication de la demande: 13.04.2022
(73) Titulaire: SpeedInnov, 75008 Paris (FR)
(72) Inventeur: CHARBONNEL, Fabrice, 17290 THAIRE (FR)
(74) Mandataire: Lavoix

(56) Documents cités:
- WO-A1-2011/069875
- DE-A1- 4 434 671
- US-A1- 2009 038 352
- US-A1- 2018 038 139

## Description

La présente invention concerne un système de verrouillage d'une trappe possédant un volet mobile entre une position fermée et une position ouverte, notamment d'une trappe de véhicule, comportant :
- un premier verrou mobile entre une configuration verrouillée interdisant l'ouverture du volet et une configuration déverrouillée autorisant l'ouverture du volet,
- un premier organe d'actionnement du premier verrou configuré pour déplacer le premier verrou entre la configuration verrouillée et la configuration déverrouillée, et
- un organe de commande manoeuvrable manuellement et lié au premier organe d'actionnement de sorte que le déplacement de l'organe de commande provoque le déplacement du premier organe d'actionnement.

L'invention s'applique notamment aux systèmes de verrouillage de trappes de véhicules ferroviaires.

Les véhicules, notamment les véhicules ferroviaires, comprennent généralement une multitude de compartiments, accueillant notamment des équipements électriques. Afin de protéger les équipements situés à l'intérieur des compartiments, ceux-ci sont recouverts par des trappes, chaque trappe possédant un volet mobile entre une position ouverte et une position fermée. Le volet est par exemple amené en position ouverte lors d'opérations de maintenance.

Toutefois, afin d'éviter une ouverture inopinée du volet lorsque le train est en opération, il est connu d'utiliser des systèmes de verrouillage actionnables par un opérateur, les systèmes de verrouillage comprenant un verrou maintenant le volet dans une position fermée verrouillée.

Le document US 2009/038352 décrit par exemple un système de verrouillage d'une boite à gants possédant un volet mobile entre une position fermée et une position ouverte. Le système de verrouillage comprend deux verrous mobiles entre une configuration verrouillée interdisant l'ouverture du volet et une configuration déverrouillée autorisant l'ouverture du volet.

De tels systèmes de verrouillage de trappe ne donnent toutefois pas entière satisfaction, et sont susceptibles de s'ouvrir par inadvertance ou suite à un acte de malveillance. Il est critique de s'assurer que les trappes restent fermées et verrouillées durant la mise en opération du train.

Un but de cette invention est de proposer un système de verrouillage améliorant la sécurité, tout en restant simple d'utilisation.

A cet effet, l'invention a pour objet un système de verrouillage selon la revendication 1.

Le système de verrouillage selon l'invention permet le verrouillage de la trappe en plusieurs points de fermeture, tout en étant simple à déverrouiller grâce à un seul organe de commande.

Suivant d'autres modes de réalisation de l'invention, le système de verrouillage comporte l'une ou plusieurs des caractéristiques des revendications 2 à 6, sans sortir du cadre de l'invention définie par les revendications annexées.

L'invention a également pour objet une trappe de véhicule selon la revendication 7.

Selon un mode de réalisation particulier, la trappe est selon la revendication 8.

L'invention et ses avantages seront mieux compris à la lecture de la description qui va suivre, donnée uniquement à titre d'exemple non limitatif, et faite en se référant aux dessins, sur lesquels :
[Fig 1] la figure 1 est une vue de face intérieure d'une trappe de véhicule ferroviaire, la trappe étant en position fermée et munie d'un système de verrouillage et
[Fig 2] la figure 2 est une vue partielle de face intérieure du système de verrouillage de la figure 1.

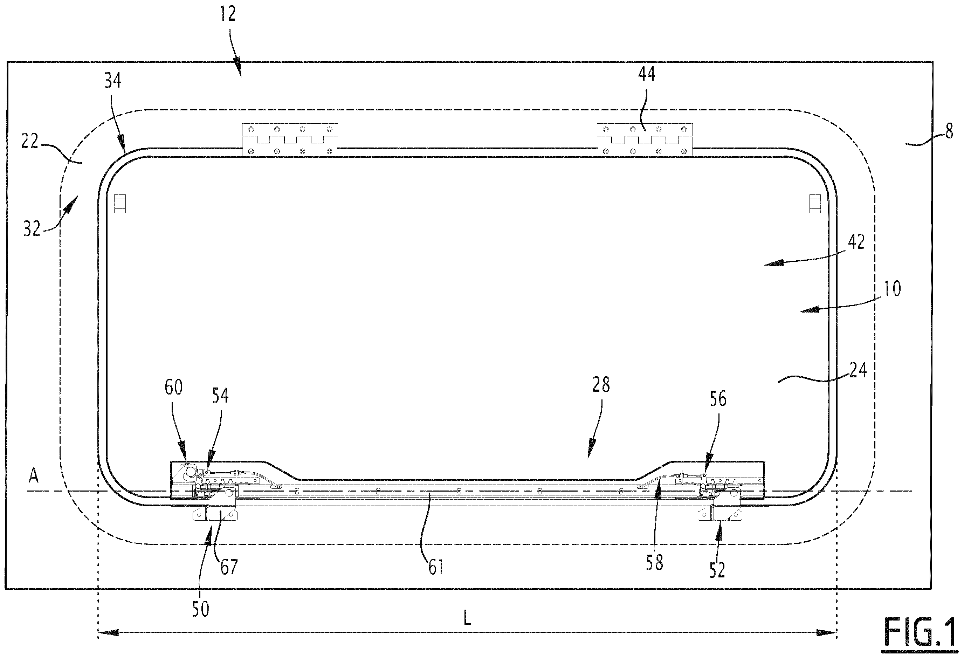

La figure 1 représente une paroi 8 de véhicule comprenant une trappe 10 selon l'invention. Le véhicule est par exemple un véhicule ferroviaire, notamment un métro, un tramway ou un train. En variante, le véhicule est un bus.

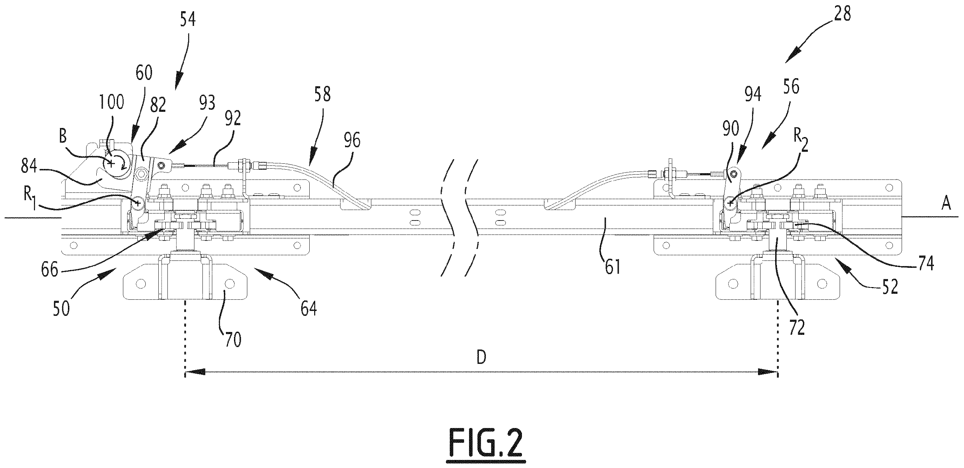

La paroi 8 est destinée à séparer un premier espace (non visible sur les figures 1 et 2) d'un deuxième espace 12. Par exemple, le premier espace correspond à l'extérieur du véhicule et le deuxième espace 12 correspond à l'intérieur du véhicule. En variante, le premier espace correspond à un espace intérieur du véhicule destiné à recevoir des passagers et/ou opérateurs et le deuxième espace 12 est un compartiment destiné à recevoir des équipements du véhicule, par exemple des équipements électriques ou électroniques.

La paroi 8 comprend un cadre 22.

La trappe 10 comprend un volet 24 monté mobile par rapport au cadre 22 entre une position fermée et une position ouverte. Le volet 24 est par exemple monté rotatif par rapport au cadre 22, par exemple par l'intermédiaire d'au moins une charnière.

La trappe 10 comprend par ailleurs un système de verrouillage 28 permettant sélectivement d'interdire l'ouverture de la trappe 10 ou d'autoriser l'ouverture de la trappe 10.

Plus spécifiquement, le système de verrouillage 28 est configuré pour sélectivement interdire l'ouverture du volet 24 ou autoriser l'ouverture du volet 24.

Le cadre 22 comprend une face extérieure orientée vers le premier espace, une face intérieure 32 orientée vers le deuxième espace 12 ainsi qu'un bord 34 définissant une ouverture. La face intérieure 32 du cadre 22 s'étend par exemple dans la continuité de la paroi 8 et affleure la paroi 8. Par exemple, la face intérieure 32 du cadre 22 est une région de la paroi 8, comme illustré sur la figure 1. Dans ce cas, l'ouverture est ménagée dans la paroi 8.

Le volet 24 en position fermée ferme au moins en partie l'ouverture, de préférence l'intégralité de l'ouverture. Le volet 24 comprend de manière connue un chant de contour complémentaire de celui du bord 34 du cadre 22, une face extérieure (non visible), et une face intérieure 42.

Le volet 24 est monté mobile sur le cadre 22 par l'intermédiaire d'une charnière 44 possédant un axe de charnière. Le volet 24 est mobile en rotation par rapport au cadre 22 autour de l'axe de charnière.

Sur la figure 1, le volet 24 présente un contour de forme générale rectangulaire. Le volet 24 s'étend selon une direction principale A. De préférence, le volet 24 présente un largeur L comprise entre 1200 mm et 3000 mm, la largeur L étant mesurée selon la direction principale A.

Le volet 24 est mobile entre une position ouverte et une position fermée.

Dans la position ouverte (non représentée), le volet 24 est dégagé de l'ouverture de sorte le volet 24 ne sépare pas le premier espace du deuxième espace 12. Dans la position ouverte du volet 24 le deuxième espace 12 est accessible depuis le premier espace par l'ouverture.

Dans la position fermée illustrée en figure 1, le volet 24 ferme l'ouverture. Le volet 24 interdit l'accès au deuxième espace 12.

Dans la position fermée du volet 24, le système de verrouillage 28 est mobile entre configuration verrouillée dans laquelle il maintient le volet 24 en position fermée et une configuration déverrouillée dans laquelle le système de verrouillage 28 autorise l'ouverture du volet 24.

Lorsque le système de verrouillage 28 est en configuration déverrouillée, un effort appliqué sur le volet 24 est apte à amener le volet 24 vers une position ouverte.

De préférence, le système de verrouillage 28 comprend en outre un système de compensation (non représenté) permettant d'amener le volet 24 vers la position ouverte.

Lorsque le volet 24 est dans la position fermée, la face extérieure du volet 24 est orientée vers le premier espace et la face intérieure 42 du volet 24 est orientée vers le deuxième espace 12.

Le système de verrouillage 28 comprend un premier verrou 50 et un deuxième verrou 52 propres à maintenir le volet 24 en position fermée verrouillée.

Le système de verrouillage 28 comprend en outre un premier organe d'actionnement 54 du premier verrou 50 et un deuxième organe d'actionnement 56 du deuxième verrou 52, le deuxième organe d'actionnement 56 étant relié au premier organe d'actionnement 54 par un organe de transmission 58 de telle manière qu'un déplacement du premier organe d'entrainement 54 entraine un déplacement correspondant du deuxième organe d'actionnement 56.

Le système de verrouillage 28 comprend également un organe de commande 60 configuré pour verrouiller/déverrouiller le système de verrouillage 28.

Dans le mode de réalisation de la figure 2, le système de verrouillage 28 comprend en outre un support 61 configuré pour être fixé sur la face intérieure 42 du volet 24.

Le système de verrouillage 28, notamment le support 61, s'étend sensiblement selon une direction d'extension.

Dans le mode de réalisation de la figure 2, ladite direction d'extension est sensiblement colinéaire à la direction principale A, de sorte que le système de verrouillage 28, notamment le support 61, s'étend sensiblement selon la direction principale A.

Chacun du premier verrou 50 et du deuxième verrou 52 est mobile entre une configuration verrouillée et une configuration déverrouillée.

Lorsque chacun du premier verrou 50 et du deuxième verrou 52 est en configuration déverrouillée, le système de verrouillage 28 est déverrouillé.

Lorsqu'au moins un du premier verrou 50 ou du deuxième verrou 52 est en configuration verrouillée, le système de verrouillage 28 est verrouillé. Ainsi, le déverrouillage d'un seul des premier et deuxième verrous 50, 52 ne permet pas le déverrouillage du système de verrouillage 28.

De préférence, la distance D entre le premier verrou 50 et le deuxième verrou 52 mesurée selon la direction d'extension du système de verrouillage est supérieure ou égale à 300 mm.

Le système de verrouillage 28 comprend ainsi deux points de verrouillage rendant difficile une ouverture en force de la trappe 10.

De préférence, le premier verrou 50 et le deuxième verrou 52 sont identiques. La fabrication du système de verrouillage 28 est ainsi simplifiée, une seule référence de verrous étant utilisée.

Chacun du premier verrou 50 et du deuxième verrou 52 comprend une première partie 64 et une deuxième partie 66 complémentaires destinées à coopérer entre elles et à assurer le verrouillage

Selon un mode de réalisation particulier, chaque verrou 50, 52 comporte de préférence une plaque de protection 67 fixée en partie sur la première partie 64 du verrou 50, 52, comme illustrée sur la figure 1.

Dans le mode de réalisation représentée sur la figure 2, la première partie 64 de chaque verrou 50, 52 est montée sur la paroi 8, notamment sur la face intérieure 32 du cadre 22 de la paroi 8, et la deuxième partie 66 de chaque verrou 50, 52 est montée sur la face intérieure 42 du volet 24.

La première partie 64 comprend par exemple une base 70 fixée sur la face intérieure 32 du cadre 22 de la paroi 8, par exemple par vissage, collage ou soudage, et un pion 72 s'étendant en saillie perpendiculairement à la direction principale A par rapport à la base 70.

La deuxième partie 66 comprend un organe de blocage 74 du pion 72. L'organe de blocage 74 présente au moins une butée bloquant le pion 72 et empêchant l'ouverture de la trappe 10. Dans le mode de réalisation de la figure 2, l'organe de blocage 74 comprend deux butées en forme de crochet propre à bloquer le pion 72 entre elles lorsque le verrou 50, 52 est verrouillé.

Chaque organe d'actionnement 54, 56 est propre à coopérer avec un verrou 50, 52 respectif pour sélectivement verrouiller ou déverrouiller le verrou 50, 52.

Le premier organe d'actionnement 54 comporte un premier levier 82 apte à coopérer avec l'organe de blocage 74 du premier verrou 50 et à déverrouiller ledit premier verrou 50 par rotation autour d'un premier axe de rotation secondaire R₁.

Le deuxième organe d'actionnement 56 comporte un deuxième levier 90 apte à coopérer avec l'organe de blocage 74 du deuxième verrou 52 et à déverrouiller ledit verrou 52 par rotation autour d'un deuxième axe de rotation secondaire R₂.

De préférence, le premier levier 82 et le deuxième levier 90 sont identiques.

En variante non représentée, le premier organe d'actionnement 54 et le deuxième organe d'actionnement 56 sont identiques. La fabrication du système de verrouillage 28 est ainsi simplifiée, une seule référence d'organes d'actionnement étant utilisée.

L'organe de transmission 58 relie le premier levier 82 et le deuxième levier 90 et assure le couplage entre les organes d'actionnement 54, 56, de sorte que la rotation du premier levier 82 d'un angle donné autour du premier axe de rotation secondaire R₁ entraine la rotation du deuxième levier 90 sensiblement d'un même angle autour du deuxième axe de rotation secondaire R₂.

L'organe de transmission 58 est de préférence un câble 92, par exemple un câble en acier Inoxydable. Le câble 92 s'étend entre une première extrémité 93 fixée sur le premier organe d'actionnement 54 et une deuxième extrémité 94 fixée sur le deuxième organe d'actionnement 56.

Le câble 92 s'étend en partie à l'intérieur d'une gaine 96. Avantageusement, comme illustré sur la figure 2, la gaine 96 s'étend en partie à l'intérieur du support 61 qui assure une protection complémentaire.

De préférence, le câble 92 présente une longueur comprise entre 300 mm et 3000 mm.

L'organe de commande 60 est configuré pour ouvrir le premier verrou 50 en agissant sur le premier organe d'actionnement 54 du premier verrou 50.

L'organe de commande 60 s'étend perpendiculairement au plan du volet 24 selon son épaisseur.

L'organe de commande 60 comporte un excentrique 100 circulaire agencé du côté de la face intérieure 42 du volet 24. L'excentrique 100 est mobile en rotation autour d'un axe principal de rotation B parallèle aux axes de rotation secondaires R₁, R₂, entre une position de repos, illustrée sur la figure 2, et une position d'actionnement.

L'excentrique 100 est configuré pour coopérer avec le premier levier 82 en prenant appui sur une surface de commande 84 du premier levier 82 prévue pour qu'une rotation de l'excentrique 100 autour de l'axe principale de rotation B entraîne un pivotement du premier levier 82 autour de premier axe de rotation secondaire R₁.

De préférence, l'excentrique 100 comporte un organe de rappel (non représenté), apte à ramener l'excentrique 100 de sa position d'actionnement à sa position de repos. Par exemple, l'organe de rappel est un ressort permettant le réarmement du système.

L'organe de commande 60 comporte également une serrure (non représentée) débouchant au niveau de la face extérieure du volet 24. La serrure est configurée pour coopérer avec une clé et pour entrainer l'excentrique 100 de la position de repos à la position d'actionnement par rotation de la clé dans la serrure. Avantageusement, la serrure est actionnable avec une clé de Berne.

Le fonctionnement du système de verrouillage 28 de la trappe 10 va à présent être décrit.

Initialement, le volet 24 de la trappe 10 se trouve dans la position fermée, le système de verrouillage 28 étant verrouillée, comme illustré en figure 1. Chaque verrou 50, 52 est dans la configuration verrouillé et le système de verrouillage 28 maintient le volet 24 en position fermée.

Un opérateur se trouvant dans le premier espace insère une clé dans la serrure de l'organe de commande 60 et réalise avec ladite clé une rotation. Dans le mode de réalisation illustré sur les figures 1 et 2, l'opérateur réalise une rotation antihoraire de 90° de la clé dans la serrure.

La rotation de la clé dans la serrure entraine la rotation de l'excentrique 100 autour de l'axe de rotation principal B, suivant la flèche représentée sur la figure 2, de la position de repos jusqu'à la position d'actionnement. Par son contact avec la surface de commande 84 du premier levier 82, l'excentrique 100 actionne la rotation du premier levier 82 autour du premier axe secondaire de rotation R₁.

La rotation du premier levier 82 entraine, d'une part, le déverrouillage du premier verrou 50 par ouverture de l'organe du blocage 74 et libération du pion 72 du premier verrou 50, et d'autre part, une traction sur le câble 92 de l'organe de transmission 58.

Le câble 92 coulisse alors au sein de la gaine 94 et entraine la rotation du deuxième levier 90 autour du deuxième axe secondaire de rotation R₂.

Ladite rotation entraine à son tour le déverrouillage du deuxième verrou 52 par ouverture de l'organe du blocage 74 et libération du pion 72 du deuxième verrou 52.

Le premier et le deuxième verrous 50, 52 sont alors tous deux en configuration déverrouillée et le volet 24 de la trappe 10 est en position fermée déverrouillée. Un simple effort appliqué sur le volet 24, ainsi que de préférence l'assistance d'un système de compensation (non représenté), amène alors le volet 24 en position ouverte.

Dans le système de verrouillage 28, l'organe de commande 60 agit sur le premier organe de verrouillage 54, qui agit à son tour sur le deuxième organe de verrouillage 56 par l'intermédiaire de l'organe de transmission 58. Les efforts sont transmis en série de l'organe de commande 60 au premier organe de verrouillage 54 puis à l'organe de transmission 58 puis au deuxième organe de verrouillage 56.

Lorsque l'opérateur retire la clé de la serrure, l'organe de rappel ramène l'excentrique 100 de la position d'actionnement à la position de repos. Les organes d'actionnements 54, 56 basculent alors à nouveau dans leur position de repos illustrée sur la figure 2 et les verrous 50, 52 passent dans leur configuration verrouillée.

Dans le système de verrouillage 28, l'organe de commande 60 agit, parmi le premier verrou 50 et le deuxième verrou 52, uniquement sur le premier verrou 50, et le premier verrou 50 agit sur le deuxième verrou 52 par l'intermédiaire de l'organe de transmission 58. L'organe de commande 60, le premier verrou 50, l'organe de transmission 58 et le deuxième verrou 52 sont agencés en série dans cette ordre. L'organe de transmission 58 réalise une synchronisation entre le premier verrou 50 et le deuxième verrou 52.

Le système de verrouillage 28 est particulièrement avantageux puisqu'il améliore la sécurité en verrouillant la trappe 10 grâce à deux verrous 50, 52. Le risque d'une ouverture accidentelle ou malveillante de la trappe 10 est ainsi fortement réduit. Le système de verrouillage 28 reste cependant simple d'utilisation grâce à un unique organe de commande 60 permettant une ouverture centralisée des deux verrous 50, 52

Lors de la fermeture de la trappe 10, le système de verrouillage 28 est réarmé automatiquement et aucune action complémentaire n'est nécessaire.

Par ailleurs, l'utilisation de deux verrous 50, 52 identiques rend l'invention particulièrement économique et simple à fabriquer.

Le système de verrouillage 28 selon l'invention offre la possibilité de commande par un seul organe de commande 60. Il permet également la synchronisation de plus de deux points de verrouillage en prolongeant l'organe de synchronisation.

En variante non représentée, le système de verrouillage 28 est inversé, de sorte que le support 61 et la deuxième partie 66 des verrous 50, 52 sont fixées sur la face intérieure 32 du cadre 22 de la paroi 8 et la base 70 de la première partie 64 des verrous 50, 52 est fixée sur la face intérieure 42 du volet 24.

En variante non représentée, le système de verrouillage 28, notamment le support 61, s'étend sensiblement selon une direction d'extension non colinéaire à la direction principale A. Par exemple, le système de verrouillage 28, notamment le support 61, s'étend sensiblement selon une direction d'extension normale à la direction principale A.

## Revendications

1. Système de verrouillage (28) d'une trappe (10) possédant un volet (24) mobile entre une position fermée et une position ouverte, notamment d'une trappe (10) de véhicule, comportant :
- un premier verrou (50) mobile entre une configuration verrouillée interdisant l'ouverture du volet (24) et une configuration déverrouillée autorisant l'ouverture du volet (24),
- un premier organe d'actionnement (54) du premier verrou (50) configuré pour déplacer le premier verrou (50) entre la configuration verrouillée et la configuration déverrouillée, et
- un organe de commande (60) manoeuvrable manuellement et lié au premier organe d'actionnement (54) de sorte que le déplacement de l'organe de commande (60) provoque le déplacement du premier organe d'actionnement (54), le système de verrouillage (28) comprenant en outre :
- un deuxième verrou (52) mobile entre une configuration verrouillée interdisant l'ouverture du volet (24) et une configuration déverrouillée autorisant l'ouverture du volet (24),
- un deuxième organe d'actionnement (56) du deuxième verrou (52) configuré pour déplacer le deuxième verrou (52) entre la configuration verrouillée et la configuration déverrouillée, et
- un organe de transmission (58) reliant le deuxième organe d'actionnement (56) au premier organe d'actionnement (54) de telle manière qu'un déplacement du premier organe d'actionnement (54) entraine un déplacement correspondant du deuxième organe d'actionnement (56),
l'organe de commande (60) comportant un excentrique (100) présentant un axe de rotation principal (B) et en appui sur une surface de commande (84) du premier organe d'actionnement (54), de sorte qu'une rotation de l'excentrique (100) entraîne un déplacement du premier organe d'actionnement (54) faisant passer le premier verrou (50) de la configuration verrouillée à la configuration déverrouillée,
**caractérisé en ce que** le premier organe d'actionnement (54) et le deuxième organe d'actionnement (56) comportent respectivement un premier levier (82) et un deuxième levier (90) dont le pivotement commande le passage entre la configuration verrouillée et la configuration déverrouillée respectivement du premier verrou (50) et du deuxième verrou (52), le premier levier (82) et le deuxième levier (90) étant de préférence identiques,
le premier levier (82) présentant un premier axe de rotation secondaire (R1), le premier levier (82) étant configuré pour que la rotation de l'excentrique (100) autour de l'axe de rotation principal (B) entraine la rotation du premier levier autour du premier axe de rotation secondaire (R1), et le déverrouillage du premier verrou (50).

2. Système de verrouillage (28) selon la revendication 1, dans lequel le premier verrou (50) et le deuxième verrou (52) sont identiques.

3. Système de verrouillage (28) selon la revendication 1 ou 2, dans lequel le premier organe d'actionnement (54) et le deuxième organe d'actionnement (56) comportent respectivement un premier levier (82) et un deuxième levier (90) dont le pivotement commande le passage entre la configuration verrouillée et la configuration déverrouillée respectivement du premier verrou (50) et du deuxième verrou (52), le premier levier (82) et le deuxième levier (90) étant de préférence identiques.

4. Système de verrouillage (28) selon l'une quelconque des revendications précédentes, dans lequel l'organe de commande (60) comporte en outre une serrure configurée pour coopérer avec une clé, de préférence une clé de Berne, et pour entrainer l'excentrique (100) en rotation autour de l'axe de rotation principal (B) du fait de la rotation de la clé dans la serrure.

5. Système de verrouillage (28) selon l'une quelconque des revendications précédentes, dans lequel l'organe de transmission (58) comporte un câble (92) reliant le premier levier (82) au deuxième levier (90), la rotation du premier levier (82) autour du premier axe de rotation secondaire (R₁) entrainant la rotation du deuxième levier (90) autour d'un deuxième axe de rotation secondaire (R₂), et le déverrouillage du deuxième verrou (52).

6. Système de verrouillage (28) selon l'une quelconque des revendications précédentes, dans lequel le premier verrou (50) et le deuxième verrou (52) sont espacés selon une direction d'extension, la distance entre le premier verrou (50) et le deuxième verrou (52) mesurée selon ladite direction d'extension étant supérieure ou égale à 300 mm.

7. Trappe (10) de véhicule, notamment de véhicule ferroviaire, destinée à fermer une ouverture réalisée dans une paroi (8) séparant un premier espace d'un deuxième espace (12), la trappe (10) comportant un volet (24) destiné à fermer ladite ouverture de ladite paroi (8) et un système de verrouillage (28) selon l'une quelconque des revendications précédentes.

8. Trappe (10) selon la revendication 7, dans laquelle chacun du premier verrou (50) et du deuxième verrou (52) comprend une première partie (64) et une deuxième partie (66) destinées à coopérer entre elles, l'une de la première partie (64) et de la deuxième partie (66) étant montée sur le volet (24) et l'autre de la premier partie (64) et de la deuxième partie (66) étant montée sur la paroi (8).

## Patentansprüche

1. Verriegelungssystem (28) einer Luke (10), die eine Klappe (24) besitzt, die zwischen einer geschlossenen und einer offenen Position beweglich ist, insbesondere eine Fahrzeugklappe (10), umfassend:
- einen ersten Riegel (50), der zwischen einer verriegelten Konfiguration, die das Öffnen der Klappe (24) verhindert, und einer entriegelten Konfiguration, die das Öffnen der Klappe (24) zulässt, beweglich ist,
- ein erstes Betätigungselement (54) des ersten Riegels (50), das konfiguriert ist, um den ersten Riegel (50) zwischen der verriegelten Konfiguration und der entriegelten Konfiguration zu bewegen, und
- ein manuell bedientes Steuerelement (60), das mit dem ersten Betätigungselement (54) verbunden ist, sodass die Bewegung des Steuerelements (60) die Bewegung des ersten Betätigungselements (54) bewirkt, wobei das Verriegelungssystem (28) ferner Folgendes umfasst:
- einen zweiten Riegel (52), der zwischen einer verriegelten Konfiguration, die das Öffnen der Klappe (24) verhindert, und einer entriegelten Konfiguration, die das Öffnen der Klappe (24) zulässt, beweglich ist,
- ein zweites Betätigungselement (56) des zweiten Riegels (52), das konfiguriert ist, um den zweiten Riegel (52) zwischen der verriegelten Konfiguration und der entriegelten Konfiguration zu bewegen, und
- ein Übertragungselement (58), das das zweite Betätigungselement (56) mit dem ersten Betätigungselement (54) verbindet, sodass eine Bewegung des ersten Betätigungselements (54) eine entsprechende Bewegung des zweiten Betätigungselements (56) bewirkt,
das Steuerelement (60) umfassend einen Exzenter (100), der eine Hauptdrehachse (B) aufweist und an einer Steuerfläche (84) des ersten Betätigungselements (54) anliegt, sodass eine Drehung des Exzenters (100) eine Bewegung des ersten Betätigungselements (54) bewirkt, die den ersten Riegel (50) von der verriegelten Konfiguration in die entriegelte Konfiguration überführt,
**dadurch gekennzeichnet, dass** das erste Betätigungselement (54) und das zweite Betätigungselement (56) jeweils einen ersten Hebel (82) und einen zweiten Hebel (90) umfassen, deren Schwenken den Übergang zwischen der verriegelten Konfiguration und der entriegelten Konfiguration jeweils des ersten Riegels (50) und des zweiten Riegels (52) steuert, wobei der erste Hebel (82) und der zweite Hebel (90) vorzugsweise identisch sind,
wobei der erste Hebel (82) eine erste sekundäre Drehachse (R₁) aufweist, wobei der erste Hebel (82) konfiguriert ist, damit die Drehung des Exzenters (100) um die primäre Drehachse (B) die Drehung des ersten Hebels um die erste sekundäre Drehachse (R₁) und die Entriegelung des ersten Riegels (50) zu bewirken.

2. Verriegelungssystem (28) nach Anspruch 1, wobei der erste Riegel (50) und der zweite Riegel (52) identisch sind.

3. Verriegelungssystem (28) nach Anspruch 1 oder 2, wobei das erste Betätigungselement (54) und das zweite Betätigungselement (56) jeweils einen ersten Hebel (82) und einen zweiten Hebel (90) umfassen, deren Schwenken den Übergang zwischen der verriegelten Konfiguration und der entriegelten Konfiguration des ersten Riegels (50) bzw. des zweiten Riegels (52) steuert, wobei der erste Hebel (82) und der zweite Hebel (90) vorzugsweise identisch sind.

4. Verriegelungssystem (28) nach einem der vorherigen Ansprüche, wobei das Betätigungselement (60) ferner ein Schloss umfasst, das konfiguriert ist, um mit einem Schlüssel, vorzugsweise einem Berner Schlüssel, zusammenzuwirken und den Exzenter (100) aufgrund der Drehung des Schlüssels in dem Schloss in eine Drehung um die Hauptdrehachse (B) zu versetzen.

5. Verriegelungssystem (28) nach einem der vorherigen Ansprüche, wobei das Übertragungselement (58) ein Kabel (92) umfasst, das den ersten Hebel (82) mit dem zweiten Hebel (90) verbindet, wobei die Drehung des ersten Hebels (82) um die erste sekundäre Drehachse (R₁) die Drehung des zweiten Hebels (90) um eine zweite sekundäre Drehachse (R₂) und die Entriegelung des zweiten Riegels (52) bewirkt.

6. Verriegelungssystem (28) nach einem der vorherigen Ansprüche, wobei der erste Riegel (50) und der zweite Riegel (52) in einer Erstreckungsrichtung voneinander beabstandet sind, wobei der Abstand zwischen dem ersten Riegel (50) und dem zweiten Riegel (52), gemessen in der Erstreckungsrichtung, größer als oder gleich wie 300 mm ist.

7. Luke (10) eines Fahrzeugs, insbesondere eines Schienenfahrzeugs, zum Verschließen einer Öffnung, die in einer Wand (8) ausgeführt ist, die einen ersten Raum von einem zweiten Raum (12) trennt, wobei die Luke (10) eine Klappe (24) zum Verschließen der Öffnung der Wand (8) und ein Verriegelungssystem (28) nach einem der vorherigen Ansprüche umfasst.

8. Luke (10) nach Anspruch 7, wobei jede von der ersten Verriegelung (50) und der zweiten Verriegelung (52) einen ersten Teil (64) und einen zweiten Teil (66) umfasst, die dazu bestimmt sind, miteinander zusammenzuwirken, wobei einer von dem ersten Teil (64) und dem zweiten Teil (66) an der Klappe (24) montiert ist und der andere von dem ersten Teil (64) und dem zweiten Teil (66) an der Wand (8) montiert ist.

## Claims

1. A locking system (28) for a hatch (10) having a flap (24) movable between a closed position and an open position, in particular a vehicle hatch (10), comprising:
- a first lock (50) movable between a locked configuration preventing the flap (24) from opening and an unlocked configuration allowing the flap (24) to open,
- a first actuating member (54) for the first lock (50) configured to move the first lock (50) between the locked configuration and the unlocked configuration, and
- a manually operable control member (60) connected to the first actuating member (54) so that movement of the control member (60) causes movement of the first actuating member (54), the locking system (28) further comprising:
- a second lock (52) movable between a locked configuration preventing the flap (24) from opening and an unlocked configuration allowing the flap (24) to open,
- a second actuating member (56) for the second lock (52) configured to move the second lock (52) between the locked configuration and the unlocked configuration, and
- a transmission member (58) connecting the second actuating member (56) to the first actuating member (54) so that a movement of the first actuating member (54) causes a corresponding movement of the second actuating member (56),
the control member (60) comprising an eccentric (100) having a main axis of rotation (B) and bearing on a control surface (84) of the first actuating member (54), so that rotation of the eccentric (100) causes the first actuating member (54) to move, passing the first lock (50) from the locked configuration to the unlocked configuration,
**characterised in that** the first actuating member (54) and the second actuating member (56) comprise a first lever (82) and a second lever (90) respectively, the pivoting of which controls the passage between the locked configuration and the unlocked configuration respectively of the first lock (50) and of the second lock (52), the first lever (82) and the second lever (90) preferably being identical,
the first lever (82) having a first secondary axis of rotation (R₁), the first lever (82) being configured so that rotation of the eccentric (100) about the main axis of rotation (B) causes rotation of the first lever about the first secondary axis of rotation (R₁), and unlocking of the first lock (50).

2. A locking system (28) as claimed in claim 1, wherein the first lock (50) and the second lock (52) are identical.

3. A locking system (28) according to claim 1 or 2, in which the first actuating member (54) and the second actuating member (56) comprise a first lever (82) and a second lever (90) respectively, the pivoting of which controls the passage between the locked configuration and the unlocked configuration of the first lock (50) and the second lock (52) respectively, the first lever (82) and the second lever (90) preferably being identical.

4. A locking system (28) according to any one of the preceding claims, in which the control member (60) further comprises a lock configured to cooperate with a key, preferably a Berne key, and to drive the eccentric (100) in rotation about the main axis of rotation (B) as a result of the rotation of the key in the lock.

5. A locking system (28) according to any one of the preceding claims, in which the transmission member (58) comprises a cable (92) connecting the first lever (82) to the second lever (90), the rotation of the first lever (82) about the first secondary axis of rotation (R₁) causing rotation of the second lever (90) about a second secondary axis of rotation (R₂), and unlocking of the second lock (52).

6. A locking system (28) according to any one of the preceding claims, in which the first latch (50) and the second latch (52) are spaced apart along a direction of extension, the distance between the first latch (50) and the second latch (52) measured along said direction of extension being greater than or equal to 300 mm.

7. Hatch (10) for a vehicle, in particular a rail vehicle, intended to close an opening made in a wall (8) separating a first space from a second space (12), the hatch (10) comprising a flap (24) intended to close the said opening in the said wall (8) and a locking system (28) according to any one of the preceding claims.

8. Hatch (10) according to claim 7, wherein each of the first latch (50) and the second latch (52) comprises a first part (64) and a second part (66) intended to cooperate with each other, one of the first part (64) and the second part (66) being mounted on the flap (24) and the other of the first part (64) and the second part (66) being mounted on the wall (8).
